# EUROPÄISCHE PATENTSCHRIFT

(11) **EP 3 959 017 B1**
(45) Veröffentlichungstag und Bekanntmachung des Hinweises auf die Patenterteilung: **16.07.2025**
(21) Anmeldenummer: 20718349.2
(22) Anmeldetag: 20.04.2020
(51) Int. Cl.: B02C 18/14, A01G 3/00

(54) **ZERKLEINERUNGS- / SCHNEIDEMASCHINE**
SHREDDING / CUTTING MACHINE
MACHINE À DÉCHIQUETER / À COUPER

(30) Priorität: 23.04.2019 IT 201900006240
(43) Veröffentlichungstag der Anmeldung: 02.03.2022
(73) Patentinhaber: Seppi M. spa-AG, 38017 Mezzolombardo (IT)
(72) Erfinder: SEPPI, Lorenz, 39052 Caldaro (IT)
(74) Vertreter: Ausserer, Anton
(86) Internationale Anmeldenummer: PCT/EP2020/060961
(87) Internationale Veröffentlichungsnummer: WO 2020/216700

(56) Entgegenhaltungen:
- EP-A1- 2 363 017
- EP-A1- 2 818 248
- EP-A1- 3 315 201

## Beschreibung

Die vorliegende Erfindung betrifft eine bewegbare Zerkleinerungs- / Schneidemaschine gemäß dem klassifizierenden Teil von Anspruch 1.

### Technischer Bereich

Maschinen, die zum Zerkleinern und Schneiden von Material verwendet werden, beispielsweise Biomasse, können für verschiedene Verwendungszwecke unterschiedliche Ausbildungen/Zusammensetzungen aufweisen. Unterschiedliche Werkzeuge erfordern möglicherweise unterschiedliche Schnitttiefen. In dieser Beschreibung bezeichnet das Werkzeug ein Werkzeug, das in einem geeigneten Werkzeughaltersitz montiert ist, der seinerseits an einem Werkzeughalterrotor befestigt ist.

### Stand der Technik

Aus US 2017/079219 ist ein Ring zur Schneid- und / oder Häckselsteuerung bekannt, der einen Schnitttiefenkontrollring umfasst. Dieser Ring hat ein erstes Ende und ein zweites Ende. Zwischen dem ersten und dem zweiten Ende befindet sich ein Werkzeughalter, bei dem der Ring mit dem hinteren Teil des Werkzeughalters verbunden und zumindest teilweise vor dem Körper des Schneidwerkzeugs angeordnet ist.

Der beschriebene Ring muss an dem Rotor montiert sein, an dem die Werkzeughalter befestigt sind. Das zu Häckselende bewegte Material kann seitlich vom Schneidwerkzeug oder über das Schneidwerkzeug laufen.

Die CA253198 beschreibt eine rohrförmige zylindrische Basis für Schneideköpfe. Eine Reihe von Schneidwerkzeugen, die an der Außenfläche montiert sind, sind an der zylindrischen Basis montiert. Jedem der Schneidwerkzeuge ist ein Schutz zugeordnet, der an der zylindrischen Oberfläche angebracht ist.

Der beschriebene Ring muss an dem Rotor montiert sein, an dem die Werkzeughalter befestigt sind, das zu zerkleinernde Material kann seitlich vom Schneidwerkzeug oder über dem Schneidwerkzeug laufen.

EP 2 363 017 beschreibt eine Zerkleinerungsvorrichtung für Pflanzen mit einer im Wesentlichen zylindrischen Kammer. In der Schneidkammer befindet sich eine Reihe von Seitenwänden, die die Schneidbereiche unterteilen. Dieses Gerät ist fest und wird über einen Stromkabel mit Strom versorgt. Die einzelnen Seitenwände sind über Bleche miteinander verbunden. Diese Platten dienen zur Kalibrierung des Geräts. Eine andere Zerkleinerungsmaschine, die den Oberbegriff des Anspruchs 1 offenbart, ist aus EP 2 818 248 A1 bekannt.

Bei Zerkleinerungsmaschinen stellt sich häufig das Problem, dass das zerkleinerte Material nicht gleichmäßig zerkleinert wird und nach dem das Material die Zerkleinerungsmaschine passiert hat, bleibt Biomasse oder dergleichen welche ungeschnitten und nicht gleichmäßig zerkleinert ist. Dies ist insbesondere auf die Schnitttiefe und / oder auf die Ablenkung des zu zerkleinernden Materials zurückzuführen, das seitlich oder über dem Schneidwerkzeug abdriften kann.

Dieses Problem verursacht eine Vielzahl von Nachteilen. Insbesondere wenn die Schnitttiefe zu groß ist, können Probleme mit der verwendeten Kraft auftreten, die nicht ausreicht, um das Material zu zerkleinern. Und zweitens, wenn das zerkleinerte Material zu lang ist, kann es beispielsweise für die Kompostierung von Biomasse problematisch sein, was länger dauern kann.

### Kurze Beschreibung der Erfindung

Die Aufgabe der vorliegenden Erfindung ist es, eine Zerkleinerungs- / Schneidemaschine bereitzustellen, die ein gleichmäßiges Schneiden der Biomasse und dergleichen garantiert, wobei eine zu hohe Schnitttiefe vermieden wird, die dazu führen könnte, dass die Maschine verstopft.

Dieses Ziel wird mittels einer Zerkleinerungs- / Schneidemaschine gemäß dem kennzeichnenden Teil von Anspruch 1 erreicht.

Der Oberbegriff betrifft Zerkleinerung- / Schneidemaschine, insbesondere für Biomasse und dergleichen, umfassend einen Rahmen, in dem ein Werkzeughalterrotor drehbar gelagert ist, auf dem eine Reihe von Werkzeugen angeordnet sind.

Erfindungsgemäß sind die Werkzeuge in Kanälen angeordnet, die durch Seitenwände gebildet werden und mindestens ein geneigtes Element umfasst, welches vor dem Werkzeug angeordnet ist, und das Element deckt mindestens 60% der Breite zwischen den Wänden im Kanal ab.

Vorteilhafterweise deckt das geneigte Element die gesamte Breite zwischen den beiden Seitenwänden ab. Vorteilhafterweise ist in dem durch die Wände gebildeten Kanal eine weitere Wand in der Mitte angeordnet, um den Kanal zumindest teilweise entlang des Umfangs des Werkzeughalterrotors zu teilen.

Das vorgesehene prädisponierte geneigte Element kann auch aus mehreren einzelnen Elementen bestehen.

Erfindungsgemäß sind Ablenkelemente am Rahmen entlang der Breite des Werkzeughalterrotors auf dem Rahmen angeordnet, der den Werkzeughalterotor aufnimmt, wodurch verhindert wird, dass das zu zerkleinernde Material den Schneidbereich verlässt und von den auf dem Werkzeughalterrotor angeordneten Werkzeugen nicht geschnitten wird. Erfindungsgemäß sind Ablenkelemente am Rahmen gegenüber den Schneidwerkzeugen, die in den durch die Wände gebildeten Kanälen angeordnet sind, angeordnet.

Weitere Eigenschaften und Details der Erfindung ergeben sich aus den Ansprüchen und aus der folgenden Beschreibung einer bevorzugten nicht einschränkenden Ausführungsform, die in den beigefügten Zeichnungen dargestellt ist, in denen:

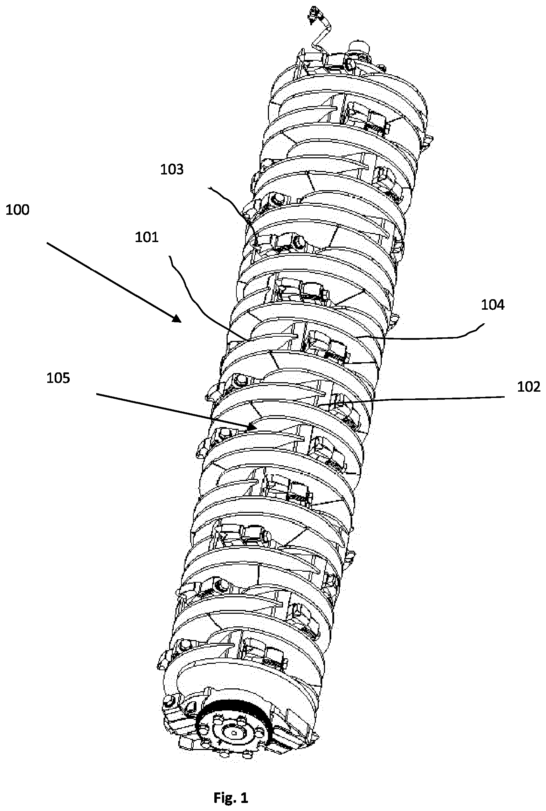

- Fig. 1: eine perspektivische Ansicht eines Werkzeughalterrotors einer erfindungsgemäßen Zerkleinerungs-, Schneidemaschine

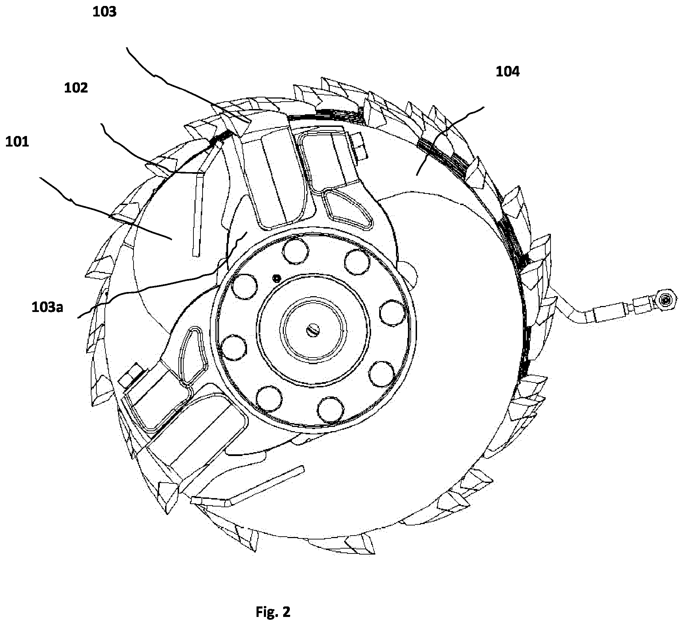

- Fig. 2: zeigt, eine Seitenansicht eines Werkzeughalterrotors einer erfindungsgemäßen Zerkleinerungs-, Schneidemaschine zeigt,

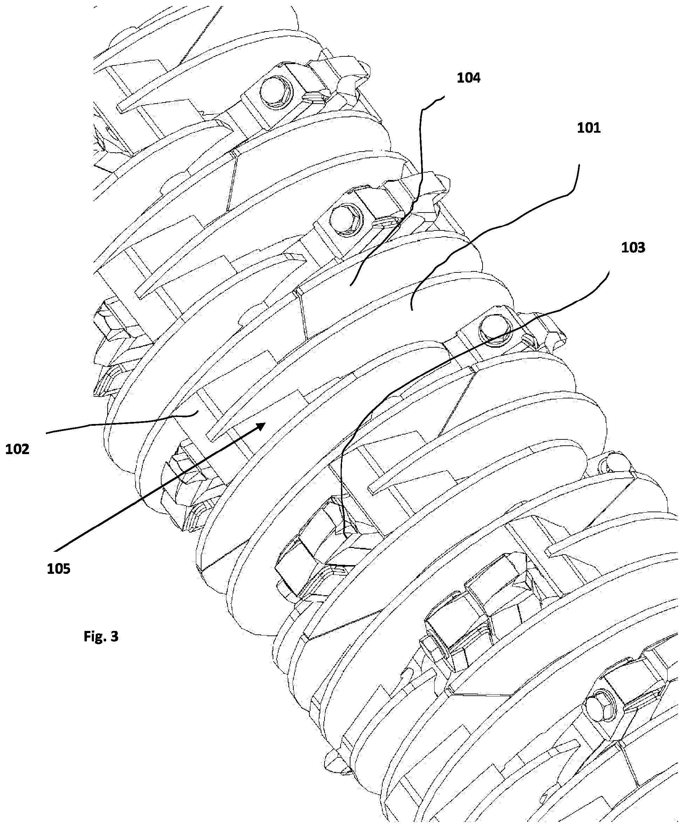

- Fig. 3: eine perspektivische Teilansicht eines Werkzeughalterrotors einer erfindungsgemäßen Zerkleinerungs-, Schneidemaschine zeigt,

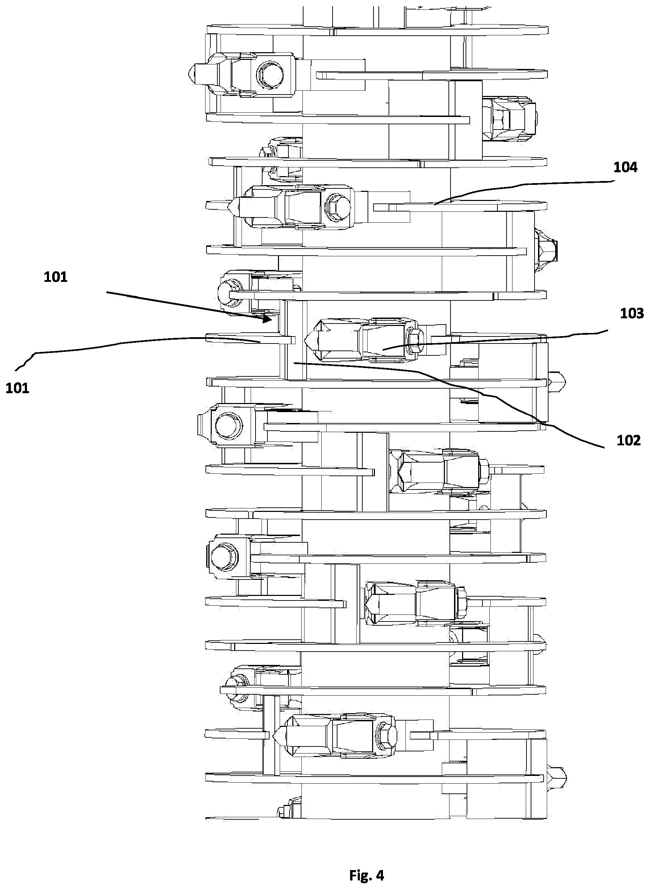

- Fig. 4: eine Draufsicht auf einen Werkzeughalterrotor einer erfindungsgemäßen Zerkleinerungs-, Schneidemaschine mit einem Schutz zeigt,
- Fig. 5: eine perspektivische Ansicht einer Zerkleinerungsmaschine gemäß der Erfindung zeigt, und

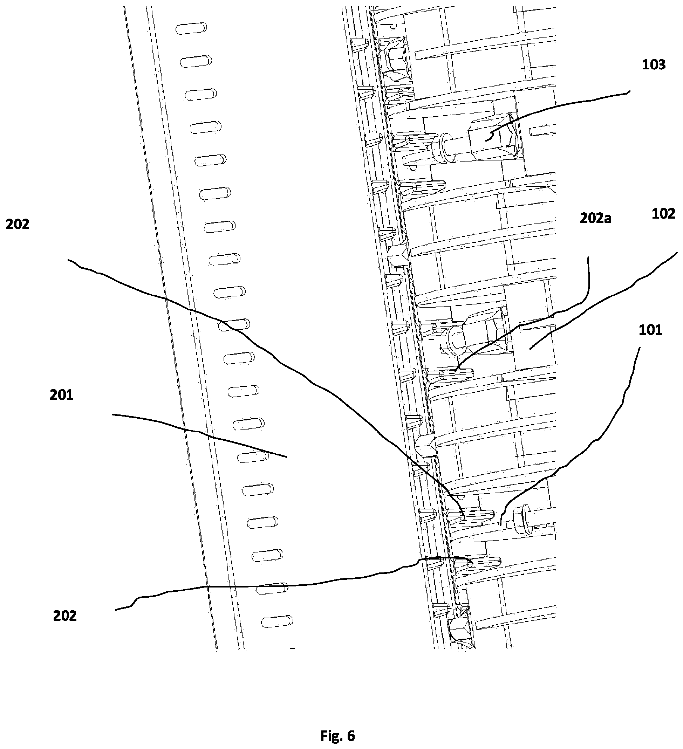

- Fig. 6: eine Vergrößerung einer perspektivischen Ansicht einer Zerkleinerungsmaschine gemäß der Erfindung zeigt.

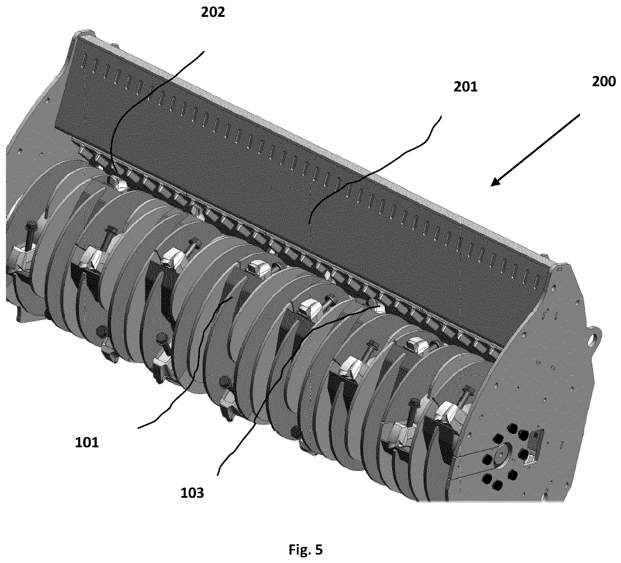

In der Figur 5 wird mit der Bezugsziffer 200 eine Maschine zum Zerkleinern und Schneiden von Biomasse und dergleichen bezeichnet. Die Bezugsziffer 201 bezeichnet einen Rahmen, in dem ein Werkzeughalterrotor 100 drehbar aufgenommen ist. Der Werkzeughalterrotor 100 wird beispielsweise von einem nicht gezeigten Übertragungsriemen angetrieben, der mittels eines Hydraulikmotors oder dergleichen angetrieben werden kann oder mittels einer Welle, die von dem Fahrzeug angetrieben wird, das die Zerkleinerungsmaschine trägt. Eine Reihe von Wänden 104 ist auf dem Werkzeughalterrotor 100 angeordnet. Diese Wände 104 bilden Kanäle 105, in denen die Schneidwerkzeuge 103 zum Schneiden der Biomasse von Werkzeughaltern getragen werden. Wenn sich der Werkzeughalterrotor 100 dreht, gelangt die Biomasse in die Kanäle 105. Vor den Schneidwerkzeugen 103 ist ein Ablenkelement im Kanal 102 angeordnet. Erfindungsgemäß ist dieses Ablenkelement im Kanal zum Schneidwerkzeug 103 geneigt. Auf diese Weise lenkt das Ablenin Kanal 102 die Biomasse in Richtung des Schneidwerkzeugs 103 ab. Das Ablenkelement im Kanal 102 bedeckt mindestens 60% der Breite zwischen den Wänden 104, die die Kanäle 105 bilden. Vorzugsweise bedeckt das Ablenkelement im Kanal 102 die gesamte Breite zwischen den Wänden 104.

Das Schneidwerkzeug 103 wird von einem Werkzeughaltersitz 103a aufgenommen. Vorteilhafterweise ist das Ablenkelement im Kanal 102 dem Werkzeughaltersitz 103a zumindest teilweise überlagert.

Vorteilhafterweise grenzt das Ablenkelement im Kanal 102 zumindest in seinem oberen Teil an das Schneidwerkzeug 103 und/oder an den Werkzeughaltersitz 103a.

Das Ablenkelement im Kanal 102 kann auch aus mehreren Teilen bestehen, vorzugsweise besteht es jedoch aus einem einzigen Blatt.

In dem durch die Wände 104 gebildeten Kanal 105 ist vorzugsweise eine weitere Wand/Trennwand 101 angeordnet, die vorzugsweise mittig zwischen den Wänden 104 angeordnet ist und sich entlang des Umfangs des Werkzeughalterrotors 100 erstreckt.

Diese Trennwand 101 kann eine Seitenwand für einen nachfolgenden Kanal 105 bilden, in dem ein weiteres Schneidwerkzeug 103 angeordnet ist.

In demselben Kanal 105, der durch die Wände 104 gebildet wird, können mehrere Schneidwerkzeuge 103 angeordnet sein.

Erfindungsgemäß sind Ablenkelemente am Rahmen 202 auf dem Rahmen 201 angeordnet.

Diese Ablenkelemente am Rahmen sind gegenüber den durch die Wände 104 gebildeten Kanälen 105 am Rahmen angeordnet.

Erfindungsgemäß sind mindestens zwei Ablenkelemente am Rahmen pro Kanal 105 vorgesehen und sind seitlich zu den Schneidwerkzeugen 103 angeordnet. Auf diese Weise lenken diese Ablenkelemente am Rahmen 202 die in den Kanälen fließende Biomasse in Richtung der Schneidwerkzeuge 103 ab, die durch das Ablenkelement im Kanal 102 zur Außenseite des Rotors in Richtung des Rahmens 201 abgelenkt werden. Um zu vermeiden, dass dieses Material nicht geschnitten oder zerkleinert wird, lenken die Ablenkelemente am Rahmen das Material in den Kanälen 105 ab und ermöglichen so ein feines und gleichmäßiges Zerkleinern.

In einer bevorzugten Ausführungsform wird das Ablenkelement 202 mittels einer lösbaren Verbindung mit dem Rahmen der Maschine 201 verbunden.

Weiterhin kann das Ablenkelement am Rahmen 202 ein Schneidelement 202a aufweisen, um nicht nur den Materialfluss abzulenken und/oder zu blockieren, sondern auch das Material zu zerkleinern und/oder zu schneiden.

Es ist schließlich klar, dass an der bis jetzt beschriebenen Maschine 200 für den Fachmann naheliegende Zusätze, Änderungen oder Varianten vorgenommen werden können ohne den von den beigefügten Patentansprüchen festgelegten Schutzbereich zu verlassen.

### Liste der Referenznummern

100 Werkzeugrotor
101 Trennwand
102 Ablenkelement im Kanal
103 Schneidwerkzeug
103a Werkzeughaltersitz
104 Wände
105 Kanal
200 Maschine zum Zerkleinern und Schneiden von Material
201 Rahmen
202 Ablenkelement am Rahmen
202a Schneide des U Ablenkelement

## Patentansprüche

1. Maschine zum Zerkleinern/Schneiden (200), insbesondere von Biomasse und dergleichen, umfassend einen Rahmen (201), in dem ein Werkzeughalterrotor (100) drehbar gelagert ist, auf dem eine Reihe von Schneidwerkzeugen (103) angeordnet ist, wobei die Schneidwerkzeugen (103) in Kanälen (105) angeordnet sind, die durch Seitenwände (104) gebildet sind, und in einem Kanal (105) angeordnet sind, in dem mindestens ein geneigtes Ablenkelement (102)im Kanal vor einem Werkzeug angeordnet ist, und wobei Ablenkelemente (202) am Rahmen gegenüber den Kanälen (105) am Rahmen (201) angeordnet sind, **dadurch gekennzeichnet, dass** mindestens zwei Ablenkelemente (202) am Rahmen gegenüberliegend pro Kanal (105) und seitlich zu den Schneidwerkzeugen (103) angeordnet sind.

2. Zerkleinerungs-/Schneidemaschine (200) nach Anspruch 1 **dadurch gekennzeichnet, dass** sich das Ablenkelement (102)im Kanal über die gesamte Breite zwischen den beiden Wänden (104) erstreckt.

3. Zerkleinerungs-/Schneidemaschine (200) nach einem der vorhergehenden Ansprüche, **dadurch gekennzeichnet, dass** eine weitere Wand/Trennwand (101) in dem Kanal (105) angeordnet ist und dass sie mittig zwischen den Wänden (104) angeordnet ist.

4. Zerkleinerungs-/Schneidemaschine (200) nach Anspruch 3, **dadurch gekennzeichnet, dass** die Trennwand (101) die Seitenwand eines anderen Kanals (105) bildet.

5. Zerkleinerungs-/Schneidemaschine (200) nach einem der vorhergehenden Ansprüche, **dadurch gekennzeichnet, dass** die Schneidwerkzeugen (103) in den Kanälen (105) in Werkzeughaltersitzen (103a) angeordnet sind und dass das Ablenkelement (102)im Kanal am Schneidwerkzeugen (103) zum indest in seinem oberen Teil und/oder am Werkzeughaltersitz (103a) anliegt und/oder den Werkzeughaltersitz (103a) überlagert.

6. Zerkleinerungs-/Schneidemaschine (200) nach einem der vorhergehenden Ansprüche, **dadurch gekennzeichnet, dass** die Ablenkelemente (202) am Rahmen abnehmbar mit dem Rahmen (201) verbunden sind.

7. Zerkleinerungs-/Schneidemaschine (200) nach einem der vorhergehenden Ansprüche, **dadurch gekennzeichnet, dass** die Ablenkelemente (202) am Rahmen mindestens eine Schneidkante (202a) aufweisen.

## Claims

1. Machine for shredding/cutting (200), in particular biomass and the like, comprising a frame (201) in which a tool holder rotor (100) is rotatably mounted, on which a row of tools (103) is arranged, **characterised in that** the tools (103) are arranged in channels (105) formed by side walls (104) and are arranged in a channel (105) in which at least one inclined deflector element (102) is arranged in the channel in front of a tool, and wherein deflecting elements (202) are arranged on the frame opposite the channels (105) on the frame (201) and at least two deflecting elements (202) are arranged opposite each other per channel (105) and laterally to the cutting tools (103).

2. Shredding/cutting machine (200) according to claim 1, **characterised in that** the deflector element (102) in the channel extends over the entire width between the two walls (104).

3. Shredding/cutting machine (200) according to one of the preceding claims, **characterised in that** a further wall/partition (101) is arranged in the channel (105) and is arranged centrally between the walls (104) .

4. Shredding/cutting machine (200) according to claim 3, **characterised in that** the partition wall (101) forms the side wall of another channel (105).

5. Shredding/cutting machine (200) according to one of the preceding claims, **characterised in that** the tools (103) are arranged in tool holder seats (103a) in the channels (105) and the deflecting element (102) in the channel rests against the tool (103) at least in its upper part and/or against the tool holder seat (103a) and/or overlaps the tool holder seat (103a).

6. Shredding/cutting machine (200) according to one of the preceding claims, **characterised in that** the deflecting elements (202) are detachably connected to the frame (201) .

7. Shredding/cutting machine (200) according to one of the preceding claims, **characterised in that** the deflecting elements (202) on the frame have at least one cutting edge (202a).

## Revendications

1. Machine à broyer/couper (200), en particulier pour la biomasse et similaire, comprenant un châssis (201) dans lequel est monté de manière rotative un rotor porte-outils (100) sur lequel est disposée une série d'outils (103), caractérisée en que les outils (103) sont disposés dans des canaux (105) formés par des parois latérales (104) et sont disposés dans un canal (105) dans lequel au moins un élément déflecteur incliné (102) est disposé dans le canal devant un outil, et dans lequel des éléments déflecteurs (202) sont disposés sur le châssis en face des canaux (105) sur le châssis (201) et au moins deux éléments déflecteurs (202) sont disposés en vis-à-vis par canal (105) et latéralement par rapport aux outils de coupe (103).

2. Broyeur/coupeur (200) selon la revendication 1, **caractérisé en ce que** l'élément déflecteur (102) s'étend dans le canal sur toute la largeur entre les deux parois (104) .

3. Broyeur/coupeur (200) selon l'une des revendications précédentes, **caractérisé en ce qu'**une autre paroi/cloison (101) est disposée dans le canal (105) et **en ce qu'**elle est disposée au centre entre les parois (104).

4. Machine de broyage/découpe (200) selon la revendication 3, **caractérisée en ce que** la cloison (101) forme la paroi latérale d'un autre canal (105).

5. Machine de broyage/découpe (200) selon l'une des revendications précédentes, **caractérisée en ce que** que les outils (103) sont disposés dans les canaux (105) dans des logements de porte-outils (103a) et que l'élément déflecteur (102) dans le canal repose contre l'outil (103) au moins dans sa partie supérieure et/ou contre le logement de porte-outil (103a) et/ou recouvre le logement de porte-outil (103a).

6. Machine de broyage/découpe (200) selon l'une des revendications précédentes, **caractérisé en ce que** les éléments déflecteurs (202) sont reliés de manière amovible au châssis (201).

7. Machine de broyage/découpe (200) selon l'une des revendications précédentes, **caractérisée en ce que** les éléments déflecteurs (202) sur le châssis présentent au moins une arête de coupe (202a).
